# EUROPÄISCHE PATENTSCHRIFT

(11) **EP 2 456 963 B1**
(45) Veröffentlichungstag und Bekanntmachung des Hinweises auf die Patenterteilung: **14.08.2013**
(21) Anmeldenummer: 10726083.8
(22) Anmeldetag: 22.06.2010
(51) Int. Cl.: F01N 3/20, F02M 61/18

(54) **EINSPRITZDÜSE ZUR ZUFUHR VON REDUKTIONSMITTEL UND VORRICHTUNG ZUR BEHANDLUNG VON ABGASEN**
INJECTION NOZZLE FOR SUPPLYING REDUCING AGENT, AND DEVICE FOR TREATING EXHAUST GASES
BUSE D'INJECTION POUR L'AMENÉE D'UN AGENT RÉDUCTEUR ET ÉQUIPEMENT DE TRAITEMENT DE GAZ D'ÉCHAPPEMENT

(30) Priorität: 22.07.2009 DE 102009034072
(43) Veröffentlichungstag der Anmeldung: 30.05.2012
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE)
(74) Vertreter: Rössler, Matthias
(86) Internationale Anmeldenummer: PCT/EP2010/058807
(87) Internationale Veröffentlichungsnummer: WO 2011/009685

(56) Entgegenhaltungen:
- WO-A1-02/090762
- WO-A1-2006/083026
- WO-A2-2009/055315
- DE-A1- 19 827 220
- US-A- 5 058 549

## Beschreibung

Die vorliegende Erfindung betrifft eine Einspritzdüse zur Zufuhr von Reduktionsmittel zu einem Abgassystem sowie eine Vorrichtung zur Behandlung von Abgasen mit einer Abgasbehandlungseinrichtung mit mindestens einer Einspritzdüse. Derartige Systeme werden insbesondere dazu eingesetzt, wässrige Harnstofflösung zu einem Abgassystem geregelt zuzugeben, um insbesondere die Stickoxidbelastung des Abgases zu reduzieren.

Eine Umsetzung von insbesondere Stickoxiden des Abgases mit wässriger Harnstofflösung und einem geeigneten Katalysator ist beispielsweise unter dem Begriff "SCR-Verfahren" (Selektive Katalytische Reaktion) bekannt.

Das für die SCR-Reaktion benötigte Ammoniak wird dabei regelmäßig nicht direkt, d. h. in reiner Form, verwendet, sondern in Form einer 32,5 %igen, wässrigen Harnstofflösung, die auch unter der Bezeichnung AdBlue^{®} erhältlich ist. Diese wässrige Lösung wird vor dem SCR-Katalysator in den Abgasstrang, z. B. mittels Dosierpumpe oder Injektor, eingespritzt.

Dabei wird die wässrige Harnstofflösung in Ammoniak umgewandelt und gemeinsam mit dem Abgas über einen SCR-Katalysator geführt. Die Umwandlung der wässrigen Harnstofflösung in Ammoniak kann mittels Thermolyse und/oder Hydrolyse erfolgen. Während bei der Thermolyse ein Erhitzen der wässrigen Harnstofflösung erfolgt, so dass sich die wässrige Harnstofflösung entsprechend zersetzt, ist bei der Hydrolyse eine katalytisch aktivierte Reaktion von Harnstoff hin zu Ammoniak angestrengt. Bei der Thermolyse können externe Heizelemente vorgesehen sein, die mit der wässrigen Harnstofflösung in Kontakt sind. Es ist aber auch möglich, die gewünschten Temperaturen durch ein fein verteiltes Eindüsen der wässrigen Harnstofflösung in das heiße Abgas zu erreichen. Bei der Hydrolyse ist ein entsprechender Hydrolyse-Katalysator vorzusehen, wobei die wässrige Harnstofflösung zusammen mit dem Abgas oder auch außerhalb des Abgassystems mit der wässrigen Harnstofflösung in Kontakt gebracht wird. Im vorliegenden Fall wird eine Zugabe von wässriger Harnstofflösung in das abgasführende Abgassystem zugeführt, so dass in Anwesenheit von Abgas die Umwandlung hin zu Ammoniak stattfindet.

Die dabei ablaufenden Reaktionen lassen sich wie folgt veranschaulichen:

### Hydrolyse der Harnstoff-Lösung:

Pyrolyse: (NH₂)₂CO→NH₃+ HNCO (Isocyansäure)
Hydrolyse: HNCO + H₂O→NH₃+CO₂

Aus der Harnstoff-Wasser-Lösung entstehen insbesondere Ammoniak und CO₂. Das so erzeugte Ammoniak kann in einem speziellen SCR-Katalysator bei entsprechender Temperatur mit den Stickoxiden im Abgas reagieren. Es gibt im Wesentlichen zwei Arten von SCR-Katalysatoren. Die eine Art besteht im Wesentlichen aus Titandioxid, Vanadiumpentoxid und Wolframoxid. Die andere Art verwendet Zeolithe.

### Reduktion der Stickoxide:

4NH₃+4NO+O₂→4N₂+6H₂O ("Standard SCR");
2NH₃+NO+NO₂→2N₂+3H₂O ("Fast SCR");
4NH₃+3NO₂→3.5N₂+6H₂O ("NO₂ SCR").

Die Menge des eingespritzten Harnstoffs wird in Abhängigkeit von der Stickoxidemission der Verbrennungskraftmaschine und damit von der momentanen Drehzahl und dem Drehmoment des Motors geregelt. Der Verbrauch an Harnstoff-Wasser-Lösung beträgt abhängig von der Rohemission eines Diesel-Motors etwa 2 bis 8 % des eingesetzten Dieselkraftstoffs. Ist die Dosierung zu gering, so sinkt der Wirkungsgrad der Stickoxidminderung. Wird zu viel Harnstoff zudosiert, so kann das daraus gebildete Ammoniak nicht mit NOx reagieren und in die Umgebung gelangen. Da Ammoniak einen stechenden Geruch hat und bereits in sehr kleinen Konzentrationen wahrgenommen werden kann, würde dies bei einer Überdosierung zu einer Geruchsbelästigung in der Nähe des Fahrzeugs führen. Abhilfe kann dadurch geschaffen werden, dass hinter dem SCR-Katalysator ein Oxidationskatalysator eingebaut wird.

Bezüglich des Einspritzortes für das Reduktionsmittel sind bereits viele Varianten diskutiert worden. So kann die wässrige Harnstofflösung beispielsweise stromaufwärts eines Mischelementes, stromabwärts eines Mischelementes, im Bereich einer Verwirbelungskammer, stromaufwärts des SCR-Katalysators, stromabwärts einer Abgasbehandlungseinrichtung etc. zugegeben werden. Jedenfalls ist hierbei von Interesse, eine möglichst gleichmäßige bzw. schnelle Durchmischung des Reduktionsmittels im Abgasstrom zu erreichen, so dass die Reaktanden beim Durchströmen des Katalysators in ausreichendem Maße vorliegen. Dabei wurde bereits mehrfach das Problem angesprochen, dass eine möglichst rasche und vollständige Verdampfung einerseits und eine gleichmäßige Verteilung im Abgasstrom andererseits unter Berücksichtigung der jeweils herrschenden Bedingungen im Abgas zu erfolgen hat. Die Temperatur des Abgases, das Strömungsverhalten des Abgases und die Zusammensetzung des Abgases spielen hierbei eine wichtige Rolle.

Dies konnte bislang, insbesondere mit geringem technischen Aufwand, noch nicht zur vollsten Zufriedenheit für eine Vielzahl unterschiedlicher Abgassysteme erreicht werden. In diesem Zusammenhang ist insbesondere die Nachrüstbarkeit von bestehenden Abgassystemen im Automobilbau besonders schwierig.

Hiervon ausgehend ist es Aufgabe der vorliegenden Erfindung, die mit Bezug auf den Stand der Technik geschilderten Probleme zumindest teilweise zu lösen. Insbesondere soll eine Einspritzdüse angegeben werden, die einfach aufgebaut ist und eine variable bzw. an die Strömungsverhältnisse im Abgassystem angepasste Zufuhr von Reduktionsmittel erlaubt. Zudem soll eine besonders bevorzugte Anordnung der Einspritzdüse im Abgassystem für eine möglichst vollständige Umsetzung des Reduktionsmittels bzw. Verdampfung des Reduktionsmittels angegeben werden.

Diese Aufgaben werden gelöst mit einer Einspritzdüse gemäß den Merkmalen des Patentanspruchs 1. Weitere vorteilhafte Ausgestaltungen und Weiterbildungen sind in den abhängig formulierten Patentansprüchen angegeben. Es ist darauf hinzuweisen, dass die in den Patentansprüchen einzeln angegebenen Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt ebenfalls weitere Ausführungsvarianten an.

Die erfindungsgemäße Einspritzdüse zur Zufuhr von Harnstoff-Wasser-Lösung als Reduktionsmittel zu einem Abgassystem weist eine Mehrzahl von Auslassöffnungen auf, wobei Auslassöffnungen vorgesehen sind, mit denen jeweils verschiedene Tropfen des Reduktionsmittels mit verschiedenen Troptengrößen erzeugbar sind.

Die Einspritzdüse weist üblicherweise einen Anschlussbereich auf, mit dem die Einspritzdüse mit einem Reduktionsmittel-Versorgungssystem verbunden werden kann. Dazu hat die Einspritzdüse regelmäßig einen Haltebereich, mit dem die Einspritzdüse beispielsweise an einem Abgasrohr des Abgassystems fixiert werden kann. Dieser Haltebereich kann zusätzliche Isolationsmittel aufweisen, um eine thermische Entkopplung der Einspritzdüse vom heißen Abgassystem zu ermöglichen. Darüber hinaus hat die Einspritzdüse einen Zugabebereich, der regelmäßig im Inneren des Abgassystems angeordnet ist. In diesem Zugabebereich ist nun auch eine Mehrzahl von Auslassöffnungen vorgesehen, mit denen das Reduktionsmittel in das Abgasrohr eingespritzt werden kann, beispielsweise mit einem Druck von 3 bis 30 bar.

Bei der hier vorgeschlagenen Einspritzdüse sind nun Auslassöffnungen vorgesehen, mit denen jeweils verschiedene Tropfen des Reduktionsmittels erzeugbar sind. Das heißt mit anderen Worten insbesondere, dass bei einem vorgegebenen Druck des Reduktionsmittels und einer Aktivierung der Einspritzdüse beispielsweise über eine vorgegebene Zeitspanne, Tropfen unterschiedlicher Größe gleichzeitig aus der Einspritzdüse austreten. Dabei werden zumindest zwei verschiedene Tropfenarten bzw. Tropfengrößen erzeugt. Grundsätzlich können auch eine Vielzahl verschiedener Tropfen gleichzeitig mit den Auslassöffnungen gebildet werden. Durch die Bereitstellung unterschiedlicher Tropfen mit derselben Einspitzdüse kann die Flugbahn der Tropfen unter Berücksichtigung der Abgasparameter gezielt erfolgen. Ist beispielsweise ein Auftreffbereich für die jeweiligen Tropfen des Reduktionsmittels vorgegeben, so können die Arten von Tropfen so abgestimmt sein, dass diese (z. B. je nach Länge bzw. Winkel zum Abgasstrom) so eingespritzt werden, dass diese (unterschiedlichen Flugbahnen folgend) zielgenau den Auftreffbereich erreichen. Eine entsprechende Ausrichtung der Einspritzdüse bzw. der unterschiedlichen Auslassöffnungen erlaubt eine besonders einfache Montage mit großer Variationsmöglichkeit und hoher Treffgenauigkeit.

Ganz besonders bevorzugt ist dabei, dass Auslassöffnungen mit verschiedenen Querschnitten vorgesehen sind. Betrachtet man beispielsweise den Fall, dass die Auslassöffnung eine Art Bohrung ist, so können die unterschiedlichen Auslassöffnungen folglich mit unterschiedlichem Bohrungsquerschnitt ausgeführt sein. Es ist aber auch möglich, zumindest einen Teil der Auslassöffnungen mit einem sich in Strömungsrichtung des Reduktionsmittels verjüngenden bzw. erweiternden Querschnitt vorzusehen. Selbstverständlich sind auch Kombinationen dieser Arten von Querschnitten möglich. Darüber hinaus kann beispielsweise noch die Richtung der Auslassöffnungen bzw. die Strömungsrichtung des Reduktionsmittels durch die Querschnitte variiert werden.

Für einen besonders einfachen Aufbau der Einspritzdüse wird zudem vorgeschlagen, dass die Auslassöffnungen mit einer Sprühscheibe gebildet sind. Dabei kann der Grundkörper der Einspritzdüse beispielsweise für viele Anwendungen beibehalten werden, und für den jeweiligen Einsatzfall eine entsprechende Sprühscheibe vorgesehen sein. Die Sprühscheibe kann zudem gegebenenfalls gegenüber der Einspritzdüse verdreht werden, so dass sich die Lage der Auslassöffnungen mit Bezug zur Einspritzdüse bzw. zum Abgassystem ändern lässt. Die Sprühscheibe muss nicht flach ausgeführt sein, es ist auch möglich, hier gegebenenfalls gekrümmte Sprühscheiben einzusetzen. Ebenfalls ist möglich, eine Mehrzahl von Sprühscheiben direkt hintereinander anzuordnen, um durch ein Verdrehen der beiden Sprühscheiben gegeneinander Auslassöffnungen eines bestimmten Querschnittes zu bilden bzw. auch während des Betriebes der Einspritzdüse bzw. des Abgassystems verschiedene Tropfen des Reduktionsmittels erzeugen zu können.

Einer Weiterbildung zufolge sind mindestens zwei Gruppen von Auslassöffnungen an der Einspritzdüse separiert. Das bedeutet mit anderen Worten auch, dass Zonen identifizierbar sind, in denen jeweils nur eine Art von Auslassöffnungen vorgesehen ist. "Separiert" soll also in diesem Zusammenhang insbesondere bedeuten, dass mindestens zwei Gruppen voneinander räumlich abgegrenzt bzw. beabstandet sind. In besonderen Fällen können auch weitere Gruppen vorgesehen sein, insbesondere in der Art, dass gleiche Auslassöffnungen in mehreren Gruppen angeordnet sind. Dadurch kann insbesondere erreicht werden, dass die Einspritzrichtung bzw. die jeweils erzeugten Einspritzstrahle voneinander getrennt sind und einander während des Betriebes nicht wesentlich gegenseitig nachteilig beeinflussen.

Darüber hinaus wird auch vorgeschlagen, dass alle Auslassöffnungen mit einem einzigen Zuführkanal verbunden sind. Der Zuführkanal ist zylindrisch und/oder ringförmig ausgebildet und erstreckt sich regelmäßig entlang der zentralen Achse der Einspritzdüse bis hin zu den Auslassöffnungen. Der Zuführkanal ist insofern auch mit dem Reduktionsmittel-Versorgungssystem verbunden. Hieraus lässt sich also erkennen, dass bei allen Auslassöffnungen derselbe Förderdruck anliegt, der im gemeinsamen, einzigen Zuführkanal anliegt. Der Zuführkanal kann, beispielsweise mittels eines Stiftes, einer Klappe oder dergleichen, bedarfsgerecht geöffnet bzw. geschlossen werden, so dass hierdurch die Zufuhr von Reduktionsmittel hin zu den Auslassöffnungen geregelt wird. Auch damit ist ein besonders einfacher Aufbau der Einspritzdüse angegeben.

In einer besonders bevorzugten Anwendung der Einspritzdüse wird eine Vorrichtung zur Behandlung von Abgasen mit einer Abgasbehandlungseinrichtung und mindestens einer Einspritzdüse der erfindungsgemäß beschriebenen Art vorgeschlagen, wobei die zumindest zwei Gruppen von Auslassöffnungen verschiedene Auftreffbereiche auf der Abgasbehandlungseinrichtung bilden. Üblicherweise wird nun eine solche Einspritzdüse schräg in die Abgasleitung eingesetzt, so dass deren zentrale Achse beispielsweise auch schräg auf eine Stirnseite der Abgasbehandlungseinrichtung zeigt.

Dabei ist grundsätzlich möglich, dass eine solche Einspritzdüse stromaufwärts und/oder stromabwärts der Abgasbehandlungseinrichtung positioniert ist. Ist eine Position stromaufwärts der Abgasbehandlungseinrichtung vorgesehen, so erfolgt die Zugabe mit der Strömungsrichtung des Abgases. Im entgegengesetzten Fall, wenn also das Reduktionsmittel auf die rückwärtige Stirnseite der Abgasbehandlungseinrichtung aufgegeben werden soll, erfolgt eine Zugabe entgegen der Strömungsrichtung.

Um nunmehr eine möglichst gleichmäßige Benetzung der Abgasbehandlungseinrichtung mit Reduktionsmittel zu realisieren, muss, insbesondere in Abhängigkeit von der Distanz der Einspritzdüse zur Stirnseite der Abgasbehandlungseinrichtung, eine Auffächerung des Strahls unter Berücksichtung des Strömungsverhaltens des Abgases berücksichtigt werden. Hier bietet nun die erfindungsgemäße Einspritzdüse die Möglichkeit, für verschiedene Auftreffbereiche auf der Abgasbehandlungseinrichtung bzw. freie Flugbahnen der Tropfen jeweils eine Gruppe von speziell ausgeführten Auslassöffnungen vorzusehen. Die konkrete Ausgestaltung der Auslassöffnung kann sich insbesondere an dem Strömungsverhalten des Abgases bzw. des Flugverhaltens des Reduktionsmittels in dem Abgasstrom orientieren. Tropfengröße, Sprührichtung und dergleichen kann also beiden Gruppen von Auslassöffnungen angepasst sein.

Die (zeitlich) gleichmäßige Benetzung der Abgasbehandlungseinrichtung sorgt dafür, dass die thermische Masse der Abgasbehandlungseinrichtung im Bereich der Stirnseite gleichmäßig ausgenutzt wird, so dass eine entsprechende gleichmäßige, rasche Verdampfung des Reduktionsmittels erfolgt. Außerdem wird vermieden, dass durch eine besonders intensive Benetzung eines Teilbereiches der Abgasbehandlungseinrichtung eine Abkühlung der Abgasbehandlungseinrichtung erfolgt, die insbesondere die katalytische Aktivität der Abgasbehandlungseinrichtung negativ beeinflussen kann. Zudem können solche Abgasbehandlungseinrichtungen auch eine Art Speicher-Beschichtung bilden, die einen gewissen Puffer für die Bereitstellung von gasförmigem Reduktionsmittel darstellen. Auch hier soll eine möglichst gleichmäßige Ausnutzung der Abgasbehandlungseinrichtung erfolgen.

Für den Fall, dass das Reduktionsmittel stromaufwärts einer Abgasbehandlungseinrichtung aufgegeben wird, kann es sich bei der Abgasbehandlungseinrichtung beispielsweise um einen Partikelfilter und/oder Hydrolyse-Katalysator handeln. Dies gilt auch bevorzugt für die stromabwärtige Zufuhr von Reduktionsmittel, wobei (ggf. nur) der jeweilige Auftreffbereich mit einem Katalysator oder auch katalysatorfrei ausgeführt sein kann.

Bei der Vorrichtung ist weiter bevorzugt, dass die mindestens eine Einspritzdüse große erste Tropfen auf einen weiter entfernten ersten Auftreffbereich und kleine zweite Tropfen auf einen näher liegenden zweiten Auftreffbereich auf der Abgasbehandlungseinrichtung aufgeben kann. Demnach sind hier also zwei Gruppen von unterschiedlichen Auslassöffnungen gebildet, wobei die erste Gruppe große erste Tropfen generiert. Diese großen ersten Tropfen müssen den Abgasstrom über einen relativ langen Weg durchdringen, so dass hier durch die Bereitstellung von großen Tropfen eine möglichst geringe Beeinflussung durch die Abgasströmung erreicht werden soll. Bei den näher liegenden Auftreffbereichen werden kleine zweite Tropfen generiert, die gegebenenfalls durch die Abgasströmung noch aufgefächert werden können und somit auch randnahe Teilbereiche der Stirnseite der Abgasbehandlungseinrichtung erreichen können.

Als ganz besonders vorteilhaft hat sich herausgestellt, dass die mindestens eine Einspritzdüse der Abgasbehandlungseinrichtung in Strömungsrichtung des Abgases nachgeordnet ist und hin zu einer rückwärtigen Stirnseite der Abgasbehandlungseinrichtung ausgerichtet ist. In diesem Fall wird also die Zugabe des Reduktionsmittels entgegen der Strömungsrichtung erfolgen, so dass hier in besonderem Maße auch die Beeinflussung des Sprühstrahls der Einspritzdüse erfolgt. Gerade in diesem Fall können durch die unterschiedlichen Ausgestaltungen der Auslassöffnungen gezielte Flugverhalten des Reduktionsmittels im Abgasstrom eingestellt werden, so dass eine gezielte, insgesamt gleichmäßige, Benetzung der rückwärtigen Stirnseite der Abgasbehandlungseinrichtung erreicht wird.

Darüber hinaus wird eine Vorrichtung als vorteilhaft angesehen, wenn eine Führung für die mindestens eine Einspritzdüse vorgesehen ist. Die Führung stellt insbesondere eine Maßnahme zum gerichteten Einbau der Einspritzdüse in die Abgasanlage dar, wobei z. B. auch Einstellmittel und dergleichen eine - ggf. nachträgliche - Justierung der Einspritzdüse ermöglichen.

Die Erfindung findet insbesondere Anwendung bei einem Kraftfahrzeug mit einem Verbrennungskraftmotor und einem nachgelagerten Abgassystem, in dem in Strömungsrichtung zunächst eine Abgasbehandlungseinrichtung, dann wenigstens eine Einspritzdüse und später ein SCR-Katalysator vorgesehen sind. Die mindestens eine Einspritzdüse ist über eine Reduktionsmittelleitung beispielsweise mit einer Pumpe und einem Tank für Reduktionsmittel verbunden. Hier kann ebenfalls eine Rückführleitung von der Einspritzdüse bzw. der Reduktionsmittelleitung hin zum Tank vorgesehen sein, wobei entsprechende Ventile vorzusehen sind. Die Regelung der Einspritzdüse kann unter Mitwirkung einer Steuereinheit erfolgen, die beispielsweise in das Management-System für die Verbrennungskraftmaschine eingebunden ist. Das Abgassystem kann darüber hinaus Sensoren, weitere Abgasbehandlungseinrichtungen und dergleichen aufweisen, um eine zielgerechte, geregelte Zugabe von Reduktionsmittel, insbesondere wässriger Harnstofflösung, zu ermöglichen.

Die Erfindung sowie das technische Umfeld werden nachfolgend anhand der Figuren näher erläutert. Es ist darauf hinzuweisen, dass die Figuren besonders bevorzugte Ausführungsbeispiele aufzeigen, diese jedoch nicht darauf beschränkt ist. Es zeigen schematisch:
- Fig. 1:: einen Querschnitt durch eine erste Ausführungsvariante einer erfindungsgemäßen Einspritzdüse,
- Fig. 2:: ein Detail einer Anordnung der Einspritzdüse in einem Abgassystem,
- Fig. 3:: eine Ausführung der Tropfenverteilung mit einer solchen Einspritzdüse,
- Fig. 4:: eine Sprühscheibe mit verschiedenen Auslassöffnungen, und
- Fig. 5:: eine rückwärtige Ansicht auf eine Abgasbehandlungseinrichtung mit mehreren Einspritzdüsen.

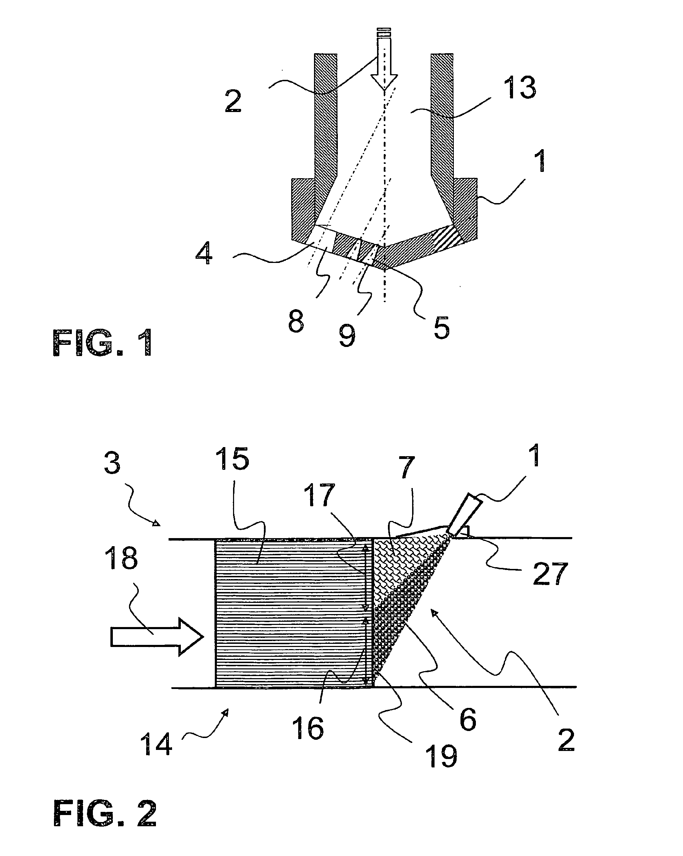

Fig. 1 zeigt schematisch ein vorderes Detail einer Einspritzdüse 1, wobei das Reduktionsmittel 2 mit der angedeuteten Strömungsrichtung (siehe Pfeil) durch einen einzelnen zentralen Zuführkanal 13 hin zur Spitze der Einspritzdüse 1 gefördert wird. Dort sind nun erste Auslassöffnungen 4 und zweite Auslassöffnungen 5 vorgesehen. Die ersten Auslassöffnungen 4 weisen dabei einen ersten Querschnitt 8 auf, der verschieden zu dem zweiten Querschnitt 9 der zweiten Auslassöffnungen 5 ausgeführt ist. Im vorliegenden Fall ist der erste Querschnitt 8 deutlich größer ausgeführt. Auch hinsichtlich der Spritzrichtung (angedeutet durch die Strich-Punkt-Strich-Linie) unterscheiden sich erste Auslassöffnungen 4 und zweite Auslassöffnungen 5. Bei der Bereitstellung von Reduktionsmittel 2 im Zuführkanal 13 mit einem vorgegebenen Druck, durchströmt das Reduktionsmittel 2 gleichzeitig sowohl die ersten Auslassöffnungen 4 als auch die zweiten Auslassöffnungen 5, wobei jeweils unterschiedliche Tropfen generiert werden. Diese unterscheiden sich insbesondere hinsichtlich der Flugbahn im Abgasstrom.

Fig. 2 zeigt nun die bevorzugte Anordnung einer solchen Einspritzdüse 1 bei einer Vorrichtung 14 zur Behandlung von Abgasen. Das Abgassystem 3 ist dabei so gestaltet, dass das Abgas mit einer Strömungsrichtung 18 zunächst eine Abgasbehandlungseinrichtung 15 durchströmt. Die Abgasbehandlungseinrichtung 15 kann (bevorzugt) nach Art eines Wabenkörpers ausgeführt sein und zumindest teilweise als Partikelfilter und/oder Hydrolyse-Katalysator ausgeführt sein. So kann insbesondere auch vorgesehen sein, dass (nur) die rückwärtige Stirnseite 19 der Abgasbehandlungseinrichtung 15 ein Speichermaterial und/oder ein Katalysatormaterial für das Reduktionsmittel 2 ausbildet.

Die (einzige) Einspritzdüse ist hierbei in einer Führung 27 mit einem schrägen Winkel hin zur rückwärtigen Stirnseite 19 der Abgasbehandlungseinrichtung 15 ausgerichtet. Aufgrund der Gestaltung der Einspritzdüse mit einer Mehrzahl von Auslassöffnungen, mit denen jeweils verschiedene Tropfen des Reduktionsmittels 2 erzeugbar sind, lassen sich verschiedene Teilstrahle bilden. Hierbei ist dargestellt, dass ein erster Teilstrahl resultierend aus den ersten Auslassöffnungen große erste Tropfen 6 bildet, die auf einen ersten Auftreffbereich 16 auftreffen, wobei die ersten Tropfen 6 einen relativ langen Weg hin zur gegenüberliegenden Seite der rückwärtigen Stirnseite 19 durch die Abgasströmung fliehen müssen. Um diese Flugbahn durch die Abgasströmung nur gering zu beeinflussen, werden hier bevorzugt größere Tropfen eingesetzt. Die näher liegenden Bereiche, hier als zweiter Auftreffbereich 17 der rückwärtigen Stirnseite 19 der Abgasbehandlungseinrichtung 15 dargestellt, können dahingehend mit kleineren zweiten Tropfen 7 erreicht werden, die mit den zweiten Auslassöffnungen der Einspritzdüse 1 generiert werden. Damit kann insbesondere auch eine Auffächerung des Tropfenstrahles erreicht werden, so dass auch die mit einem alternativ großen Winkel zu erreichenden, randnahen Bereiche benetzt werden können. Um hierbei ein möglichst exaktes Sprühbild während des Betriebes der Verbrennungskraftmaschine mit unterschiedlichen Lastzuständen zu generieren, ist bevorzugt, dass die Einspritzdüse 1 so angeordnet ist, dass die Tropfen noch im Ausströmbereich des Abgases aus der Abgasbehandlungseinrichtung 15 positioniert ist. Das bedeutet insbesondere, dass das Abgas nach dem Durchströmen der Abgasbehandlungseinrichtung 15 noch eine im Wesentlichen laminare Strömung ist, wobei sich dieser Bereich insbesondere über eine Weite von maximal 60 mm, gegebenenfalls auch nur 40 mm, erstreckt. Bei der Auslegung der Einspritzdüse ist nun sichergestellt, dass infolge der Anzahl, Richtung bzw. dem Querschnitt der Auslassöffnungen eine gleichmäßige Benetzung der verschiedenen Auftreffbereiche auf der rückwärtigen Stirnseite 19 der Abgasbehandlungseinrichtung 15 stattfindet.

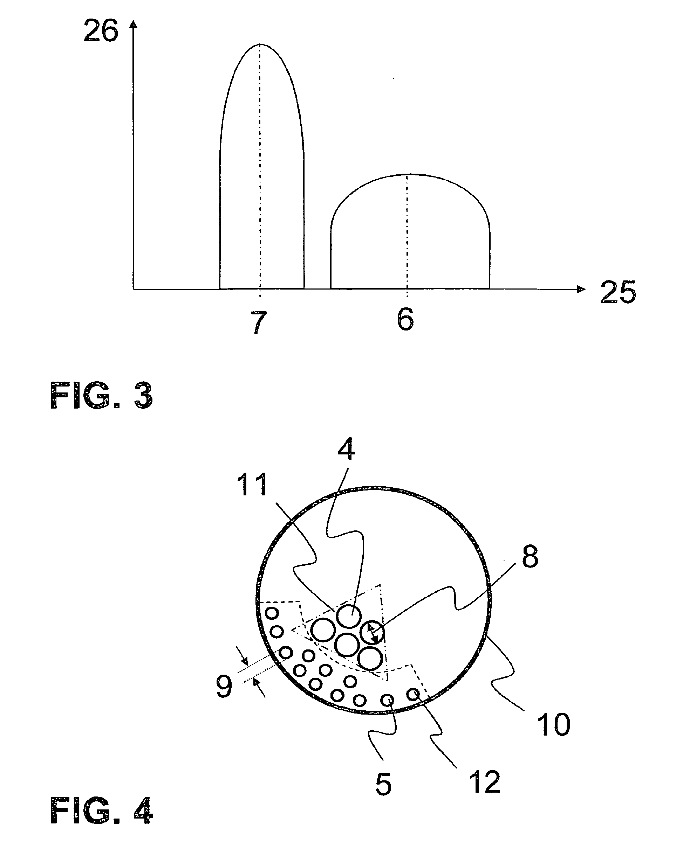

Fig. 3 soll das Sprühbild einer solchen Einspritzdüse veranschaulichen. Dargestellt ist ein Diagramm, wobei die generierte Anzahl 26 von Tropfen über die Größe 25 der Tropfen dargestellt ist. Zu erkennen ist, dass links im Mittel zweite Tropfen 7 einer vorgegebenen zweiten Größe mit einer relativ hohen Anzahl 26 erzeugt werden. Daneben wird aber gleichzeitig auch (die gleiche) Menge an ersten Tropfen 6 mit einer größeren Größe 25, allerdings mit einer geringeren Anzahl 26, bereitgestellt. Selbstverständlich können auch noch weitere Tropfengrößen mit der Einspritzdüse realisiert werden, wobei gegebenenfalls auch eine (teilweise) Überlagerung der jeweiligen Tropfengrößen ermöglicht ist. Bevorzugt ist aber eine klare Differenzierung der Tropfengrößen.

Zur Realisierung solcher unterschiedlichen Tropfen kann eine Sprühscheibe 10 eingesetzt werden, wie sie beispielsweise in Fig. 4 veranschaulicht ist. Die hier plattenförmig ausgeführte, kreisrunde Sprühscheibe 10 weist nicht über den gesamten Bereich Auslassöffnungen auf, sondern es sind hier zwei separierte Gruppen mit unterschiedlichen Auslassöffnungen ausgebildet. So ist z. B. nahe der Kante der Sprühscheibe 10 eine zweite Gruppe 12 mit zweiten Auslassöffnungen 5 in einer Zone nach Art eines Bogenabschnittes ausgebildet. Die Vielzahl von zweiten Auslassöffnungen 5 ist hier alle gleich aufgeführt, insbesondere mit demselben zweiten Querschnitt 9. Weiter im zentralen Bereich der Sprühscheibe 10 ist dahingehend die erste Gruppe 11 mit ersten Auslassöffnungen 4 ausgeführt. Hier ist die Anzahl der Auslassöffnungen deutlich geringer ausgeführt, wobei die ersten Auslassöffnungen 4 einen deutlich größeren ersten Querschnitt 8 ausbilden. Die asymmetrische Anordnung der Gruppen von Auslassöffnungen berücksichtigt insbesondere die schräge Einbauweise der Einspritzdüse, diese ist also nicht zwingend erforderlich.

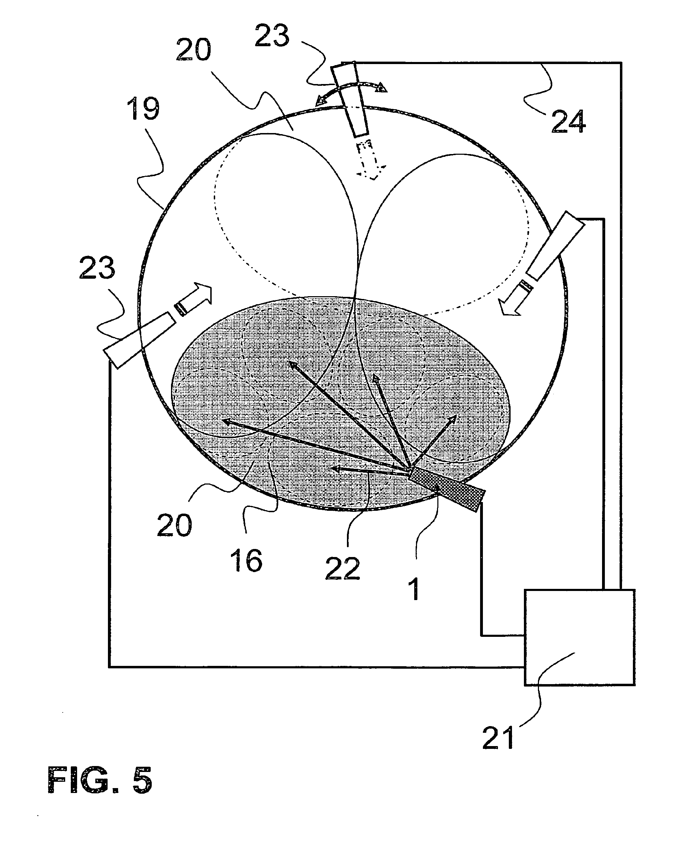

In Fig. 5 ist nun schematisch eine rückwärtige Ansicht einer Abgasbehandlungseinrichtung angegeben, wobei diese mit mehreren, hier vier, Einspritzdüsen benetzt wird. Die rückwärtige Stirnseite 19 kann also hier nicht von einer einzelnen Düse 23 gleichmäßig benetzt werden, sondern hier sind vier Düsen erforderlich. Es kann auch vorgesehen sein, dass zumindest eine der Düsen 23 beweglich, also verschwenkbar, angeordnet ist, um den Zugabebereich 20 (jeweils maximal erreichbare Fläche auf der rückwärtigen Stirnseite 19) zu vergrößern. Alle Düsen 23 bzw. Einspritzdüsen 1 sind über Leitungen 24 mit einer Steuereinheit 21 verbunden, die insbesondere die Öffnungszeiten für die Düsen vorgibt. Im unteren Bereich ist ein konkreter Zugabebereich 20 markiert. Die Einspritzdüse 1 weist hier eine Vielzahl von unterschiedlichen Auslassöffnungen auf, so dass diese sich insbesondere hinsichtlich der Zugaberichtung 22 und der Tropfengröße unterscheiden. Für jede Gruppe von Auslassöffnungen wird dabei ein Zugabebereich definiert, wobei Tropfengröße und/oder Zugaberichtung 22 an die Strömungsbedingungen angepasst ist.

Mit der hier vorgeschlagenen Einspritzdüse ist in besonders einfacher und effektiver Weise eine gleichmäßige Benetzung rückwärtiger Stirnseiten von Abgasbehandlungseinrichtungen erreicht, insbesondere auch für eine entsprechende Nachrüstung existierender Abgassysteme.

### Bezugszeichenliste

- 1: Einspritzdüse
- 2: Reduktionsmittel
- 3: Abgassystem
- 4: erste Auslassöffnung
- 5: zweite Auslassöffnung
- 6: erste Tropfen
- 7: zweite Tropfen
- 8: erster Querschnitt
- 9: zweiter Querschnitt
- 10: Sprühscheibe
- 11: erste Gruppe
- 12: zweite Gruppe
- 13: Zuführkanal
- 14: Vorrichtung
- 15: Abgasbehandlungseinrichtung
- 16: erster Auftreffbereich
- 17: zweiter Auftreffbereich
- 18: Strömungsrichtung
- 19: rückwärtige Stirnseite
- 20: Zugabebereich
- 21: Steuereinheit
- 22: Zugaberichtung
- 23: Düse
- 24: Leitung
- 25: Größe
- 26: Anzahl
- 27: Führung

## Patentansprüche

1. Einspritzdüse (1) zur Zufuhr von Harnstoff-Wasser-Lösung als Reduktionsmittel (2) zu einem Abgassystem (3) aufweisend eine Mehrzahl von Auslassöffnungen (4, 5), wobei Auslassöffnungen (4, 5) vorgesehen sind, mit denen jeweils verschiedene Tropfen (6, 7) des Reduktionsmittels (2) mit verschiedenen Tropfengrößen erzeugbar sind.

2. Einspritzdüse (1) nach Patentanspruch 1, bei der Auslassöffnungen (4, 5) mit verschiedenem Querschnitt (8, 9) vorgesehen sind.

3. Einspritzdüse (1) nach Patentanspruch 1 oder 2, bei der die Auslassöffnungen (4, 5) mit einer Sprühscheibe (10) gebildet sind.

4. Einspritzdüse (1) nach einem der vorhergehenden Patentansprüche, bei der mindestens zwei Gruppen (11, 12) von Auslassöffnungen (4, 5) an der Einspritzdüse (1) separiert sind.

5. Einspritzdüse (1) nach einem der vorhergehenden Patentansprüche, bei der alle Auslassöffnungen (4, 5) mit einem einzigen Zuführkanal (13) verbunden sind.

6. Vorrichtung (14) zur Behandlung von Abgasen mit einer Abgasbehandlungseinrichtung (15) und mindestens einer Einspritzdüse (1) nach einem der vorhergehenden Patentansprüche, wobei die zumindest zwei Gruppen (11, 12) von Auslassöffnungen (4, 5) verschiedene Auftreffbereiche (16, 17) auf der Abgasbehandlungseinrichtung (15) bilden.

7. Vorrichtung (14) gemäß Patentanspruch 6, bei der die mindestens eine Einspritzdüse (1) große erste Tropfen (6) auf einen weiter entfernten ersten Auftreffbereich (16) und kleine zweite Tropfen (7) auf einen näher liegenden zweiten Auftreffbereich (17) auf der Abgasbehandlungseinrichtung (15) aufgeben kann.

8. Vorrichtung (14) gemäß Patentanspruch 6 oder 7, bei der die mindestens eine Einspritzdüse (1) der Abgasbehandlungseinrichtung (15) in Strömungsrichtung (18) des Abgases nachgeordnet ist und hin zu einer rückwärtigen Stirnseite (19) der Abgasbehandlungseinrichtung (15) ausgerichtet ist.

9. Vorrichtung (14) gemäß einem der vorhergehenden Patentansprüche 6 bis 8, bei der eine Führung (27) für die mindestens eine Einspritzdüse (1) vorgesehen ist.

## Claims

1. Injection nozzle (1) for supplying urea-water-solution as reducing agent (2) to an exhaust gas system (3), having a plurality of outlet openings (4, 5), wherein outlet openings (4, 5) are provided by means of which in each case different droplets (6, 7) of the reducing agent (2) having different droplet sizes can be generated.

2. Injection nozzle (1) according to claim 1, in which outlet openings (4, 5) of different cross sections (8, 9) are provided.

3. Injection nozzle (1) according to claim 1 or 2, in which the outlet openings (4, 5) are formed by means of a spray disk (10).

4. Injection nozzle (1) according to one of the preceding claims, in which at least two groups (11, 12) of outlet openings (4, 5) on the injection nozzle (1) are separated.

5. Injection nozzle (1) according to one of the preceding claims, in which all the outlet openings (4, 5) are connected by a single feed duct (13).

6. Device (14) for the treatment of exhaust gases, having an exhaust gas treatment unit (15) and at least one injection nozzle (1) according to one of the preceding claims, wherein the at least two groups (11, 12) of outlet openings (4, 5) form different impingement regions (16, 17) on the exhaust gas treatment unit (15).

7. Device (14) according to claim 6, in which the at least one injection nozzle (1) can apply large first droplets (6) to a more distant first impingement region (16) and small second droplets (7) to a closer second impingement region (17) on the exhaust gas treatment unit (15).

8. Device (14) according to claim 6 or 7, in which the at least one injection nozzle (1) is arranged downstream of the exhaust gas treatment unit (15) in the direction of flow (18) of the exhaust gas and is directed toward a rearward end (19) of the exhaust gas treatment unit (15).

9. Device (14) according to one of preceding claims 6 to 8, in which a guide (27) is provided for the at least one injection nozzle (1).

## Revendications

1. Buse d'injection (1) pour l'amenée d'une solution aqueuse d'urée comme agent réducteur (2) à un système de gaz d'échappement (3) présentant une multiplicité d'orifices de sortie (4, 5), dans laquelle il est prévu des orifices de sortie avec lesquels il est possible de produire respectivement des gouttes différentes (6, 7) de l'agent réducteur (2) présentant des tailles de goutte différentes.

2. Buse d'injection (1) selon la revendication 1, dans laquelle il est prévu des orifices de sortie (4, 5) de section transversale différente (8, 9).

3. Buse d'injection (1) selon la revendication 1 ou 2, dans laquelle les orifices de sortie (4, 5) sont formés avec un disque de pulvérisation (10).

4. Buse d'injection (1) selon l'une quelconque des revendications précédentes, dans laquelle au moins deux groupes (11, 12) d'orifices de sortie (4, 5) sont séparés sur la buse d'injection (1).

5. Buse d'injection (1) selon l'une quelconque des revendications précédentes, dans laquelle tous les orifices de sortie (4, 5) sont raccordés à un seul canal d'amenée (13).

6. Dispositif (14) pour le traitement de gaz d'échappement avec un équipement de traitement de gaz d'échappement (15) et au moins une buse d'injection (1) selon l'une quelconque des revendications précédentes, dans lequel lesdits au moins deux groupes (11, 12) d'orifices de sortie (4, 5) forment des zones d'impact différentes (16, 17) sur l'équipement de traitement de gaz d'échappement (15).

7. Dispositif (14) selon la revendication 6, dans lequel ladite au moins une buse d'injection (1) peut fournir des premières grosses gouttes (6) sur une première zone d'impact plus éloignée (16) et des deuxièmes petites gouttes (7) sur une deuxième zone d'impact plus proche (17) sur l'équipement de traitement de gaz d'échappement (15).

8. Dispositif (14) selon la revendication 6 ou 7, dans lequel ladite au moins une buse d'injection (1) est disposée en aval de l'équipement de traitement de gaz d'échappement (15) dans la direction d'écoulement (18) des gaz d'échappement et est orientée vers une face frontale arrière (19) de l'équipement de traitement de gaz d'échappement (15).

9. Dispositif (14) selon l'une quelconque des revendications précédentes 6 à 8, dans lequel il est prévu un guidage (27) pour ladite au moins une buse d'injection (1).
